# EUROPÄISCHE PATENTSCHRIFT

(11) **EP 3 726 068 B1**
(45) Veröffentlichungstag und Bekanntmachung des Hinweises auf die Patenterteilung: **28.12.2022**
(21) Anmeldenummer: 20167313.4
(22) Anmeldetag: 31.03.2020
(51) Int. Cl.: F16B 5/02

(54) **TOLERANZAUSGLEICHSVORRICHTUNG**
TOLERANCE COMPENSATING DEVICE
DISPOSITIF DE COMPENSATION DE LA TOLÉRANCE

(30) Priorität: 17.04.2019 DE 102019110201
(43) Veröffentlichungstag der Anmeldung: 21.10.2020
(73) Patentinhaber: Witte Automotive GmbH, 42551 Velbert (DE)
(72) Erfinder: Mosch, Gerhard, 47228 Duisburg (DE); Spickenheier, Klaus, 58640 Iserlohn (DE); Radanovic, Vladimir, 50735 Köln (DE)
(74) Vertreter: Manitz Finsterwald Patent- und Rechtsanwaltspartnerschaft mbB

(56) Entgegenhaltungen:
- WO-A1-2015/131218
- WO-A1-2019/046079
- DE-U1-202010 002 447
- DE-U1-202018 101 519

## Beschreibung

Die Erfindung betrifft eine Vorrichtung zum Ausgleichen von Toleranzen zwischen einem ersten Bauteil und einem mittels einer Verbindungsschraube mit diesem zu verschraubenden zweiten Bauteil, umfassend ein Grundelement und ein mit dem Grundelement in Gewindeeingriff stehendes Ausgleichselement.

Eine Vorrichtung zum Ausgleichen von Toleranzen gemäß dem Oberbegriff des Anspruchs 1 ist aus der WO 2019/046079 A1 bekannt.

Bei einer bekannten Toleranzausgleichsvorrichtung der eingangs genannten Art sind das Grundelement und das Ausgleichselement durch metallische Gewindehülsen gebildet, welche in einem Linksgewindeeingriff stehen. In dem Ausgleichselement ist ein Federelement angeordnet, welches einen Reibschluss zwischen der durch die Toleranzausgleichsvorrichtung hindurchgeführten und ein Rechtsgewinde aufweisenden Verbindungsschraube und dem Ausgleichselement herstellt, so dass beim Anziehen der Verbindungsschraube ein Drehmoment auf das Ausgleichselement ausgeübt wird, welches ein Herausdrehen des Ausgleichselements aus dem Grundelement entgegen der Einführrichtung der Verbindungsschraube bewirkt.

Der Erfindung liegt die Aufgabe zugrunde, eine kostengünstigere Toleranzausgleichsvorrichtung zu schaffen.

Die Aufgabe wird durch eine Vorrichtung mit den Merkmalen des Anspruchs 1 und insbesondere dadurch gelöst, dass der Gewindeeingriff zwischen dem Grundelement und dem Ausgleichselement derart nicht-selbsthemmend ist, dass sich das Ausgleichselement in einer Einführrichtung der Verbindungsschraube aus dem Grundelement heraus bewegt, wenn die Verbindungsschraube eine in der Einführrichtung wirkende Axialkraft auf das Ausgleichselement ausübt.

Aufgrund der nicht-selbsthemmenden Ausbildung der Gewinde des Grundelements und des Ausgleichselements ist eine bloße Axialkraft, z.B. ausgeübt durch die Verbindungsschraube, ausreichend, um das Ausgleichselement aus dem Grundelement herauszudrehen. Mit anderen Worten sorgt der nichtselbsthemmende Gewindeeingriff für die Umwandlung einer Längsbewegung, z.B. bewirkt durch den Vorschub der Verbindungsschraube, in eine Drehbewegung, nämlich des Ausgleichselements.

Anders als bei der bekannten Toleranzausgleichsvorrichtung wird das Ausgleichselement erfindungsgemäß also nicht entgegen der Einführrichtung der Verbindungsschraube aus dem Grundelement herausgefahren, sondern in Einführrichtung der Verbindungsschraube. Als Einführrichtung der Verbindungsschraube wird in diesem Kontext diejenige Richtung bezeichnet, in welcher die Verbindungsschraube in die Toleranzausgleichsvorrichtung eingeführt bzw. durch diese hindurch gesteckt wird, insbesondere um für die Verschraubung des ersten und zweiten Bauteils mit einem zugeordneten Mutternelement in Eingriff gebracht zu werden. Es versteht sich, dass die Toleranzausgleichsvorrichtung zum Einführen bzw. Durchstecken der Verbindungsschraube konfiguriert sein muss und beispielsweise einen entsprechenden Durchgang für die Verbindungsschraube ausbilden kann.

Da bei der erfindungsgemäßen Toleranzausgleichsvorrichtung kein Drehmoment von der Verbindungsschraube auf das Ausgleichselement übertragen zu werden braucht, ist auch kein Federelement zur Herstellung eines Reibschlusses zwischen Verbindungsschraube und Ausgleichselement erforderlich. Wie bereits erwähnt ist es für das Herausfahren des Ausgleichselements aus dem Grundelement erfindungsgemäß ausreichend, eine Axialkraft auf das Ausgleichselement auszuüben. Dies kann beispielsweise dadurch geschehen, dass ein Kopf der Verbindungsschraube beim Durchstecken durch die Toleranzausgleichsvorrichtung mit dem Ausgleichselement in Kontakt gebracht wird und dieses mitnimmt.

Vorteilhafte Ausbildungen der Erfindung sind den Unteransprüchen, der Beschreibung und der Zeichnung zu entnehmen.

Gemäß einer Ausführungsform bilden das Grundelement und das Ausgleichselement jeweils ein Steilgewinde. Hierdurch lässt sich auf besonders einfache Weise ein nicht-selbsthemmender Gewindeeingriff realisieren.

Eine besonders einfache und kompakte Bauform wird erreicht, wenn das Grundelement ein Innengewinde und das Ausgleichselement ein Außengewinde ausbildet. Grundsätzlich wäre aber auch eine umgekehrte Ausführungsform denkbar, bei welcher das Innengewinde am Ausgleichselement und das Außengewinde am Grundelement vorgesehen ist.

Gemäß einer weiteren Ausführungsform bildet das Grundelement zwei einander gegenüberliegende Gewindegangabschnitte aus. Zur Minimierung von Reibungsverlusten im Gewinde weisen die Gewindegangabschnitte bevorzugt gleiche Steigungen auf. Die Beschränkung auf zwei Gewindegangabschnitte trägt zu einer wirtschaftlicheren Herstellbarkeit der Toleranzausgleichsvorrichtung bei, da kein vollständiges Gewinde in das Grundelement geschnitten werden muss.

Gemäß einer weiteren Ausführungsform bildet das Ausgleichselement ein mehrgängiges Gewinde aus. Bevorzugt umfasst dieses mehrere in Umfangsrichtung verteilt angeordnete Gruppen von jeweils parallel zueinander angeordneten Gewindegangabschnitten. Ähnlich wie im Fall des Grundelements trägt auch dies zu einer wirtschaftlicheren Herstellbarkeit der Toleranzausgleichsvorrichtung bei.

Gemäß einer weiteren Ausführungsform bildet das Ausgleichselement eine Angriffsfläche für einen Kopf der Verbindungsschraube aus. Über diese Angriffsfläche kann die Verbindungsschraube nicht nur eine zum Herausfahren des Ausgleichselement aus dem Grundelement erforderliche Axialkraft auf das Ausgleichselement ausüben, sondern das Ausgleichselement auch an das zweite Bauteil geklemmt werden.

Gemäß einer weiteren besonders einfachen und kompakten Bauform ist das Ausgleichselement topfförmig ausgebildet. Beispielsweise kann das Ausgleichselement einen hohlzylindrischen Abschnitt umfassen, der an seinem Ende, insbesondere an seinem dem zweiten Bauteil zugewandten Ende, in einen Bodenabschnitt übergeht, welcher einen Durchgang für die Verbindungsschraube ausbildet und eine Angriffsfläche für den Kopf der Verbindungsschraube definiert.

Erfindungsgemäß ist das Ausgleichselement aus wenigstens zwei Segmenten zusammengesetzt, die axial zueinander verschiebbar sind. Vorzugsweise sind die Segmente zumindest teilhohlzylindrisch ausgebildet. Beispielsweise kann es sich bei diesen Segmenten um Hohlzylinderhälften handeln. Ferner können die Segmente mittels Verbindungselementen stoffschlüssig oder form- und/oder kraftschlüssig miteinander verbunden sein. Beispielsweise können die Verbindungselemente Federelemente umfassen, insbesondere einstückig mit den Segmenten ausgebildete Federelemente. Alternativ können die Segmente miteinander verclipst sein. Es versteht sich, dass hierzu korrespondierende Clipse und Clipsaufnahmen an den Segmenten vorgesehen sein müssen.

Bevorzugt sind die Segmente in einem Ausgangs- oder Ruhezustand des Ausgleichselements durch die Verbindungselemente axial zueinander versetzt gehalten. Idealerweise sind die Gewindegangabschnitte des einen Segments und die Gewindegangabschnitte des anderen Segments derart angeordnet, dass sie im Ausgangs- bzw. Ruhezustand des Ausgleichselements, d.h. also wenn die Segmente axial zueinander versetzt sind, das gewünschte Gewinde des Ausgleichselements bilden, um einen möglichst reibungsarmen Gewindeeingriff zwischen Ausgleichselement und Grundelement zu gewährleisten. Erst beim Anziehen der Verbindungsschraube und Klemmen des Ausgleichselements an das zweite Bauteil werden die Segmente miteinander ausgerichtet und die entsprechenden Gewindeteile relativ zueinander verschoben, wodurch ein für das Herausfahren des Ausgleichselements aus dem Grundelement erforderliches Spiel aus dem nicht-selbsthemmenden Gewindeeingriff genommen wird, gewissermaßen also auch Toleranzen im Gewindeeingriff ausgeglichen werden.

Vorteilhafterweise ist das Ausgleichselement aus einem Kunststoffmaterial gebildet und insbesondere ein Spritzgussteil. Alternativ oder zusätzlich kann auch das Grundelement aus einem Kunststoffmaterial gebildet und insbesondere ein Spritzgussteil sein.

Gemäß einer weiteren Ausführungsform ist das Grundelement durch das erste Bauteil gebildet, beispielsweise indem entsprechende Gewindegangabschnitte in einer Bohrung des ersten Bauteils vorgesehen sind. Einen vielseitigeren und wirtschaftlicheren Einsatz ermöglicht die Toleranzausgleichsvorrichtung jedoch, wenn es sich bei dem Grundelement um ein separates Bauteil handelt, welches bedarfsweise an dem ersten Bauteil befestigt wird, beispielsweise in dieses eingeclipst, eingepresst, eingeklebt oder eingeschweißt wird.

Nachfolgend wird die Erfindung rein beispielhaft anhand einer möglichen Ausführungsform unter Bezugnahme auf die beigefügte Zeichnung beschrieben. Es zeigen:
- Fig. 1: eine perspektivische Ansicht eines Ausgleichselements und eines Grundelements einer erfindungsgemäßen Toleranzausgleichsvorrichtung;
- Fig. 2A: eine Schnittansicht der an einem ersten Bauteil angebrachten Toleranzausgleichsvorrichtung von Fig. 1 in einem Vormontagezustand;
- Fig. 2B: die Toleranzausgleichsvorrichtung von Fig. 2A in einem an einem zweiten Bauteil montierten Zustand;
- Fig. 3: eine perspektivische Ansicht eines Grundelements, welches einstückig mit einem ersten Bauteil ausgebildet ist.

In den Figuren ist eine Toleranzausgleichsvorrichtung zur Überbrückung eines Spalts 10 zwischen zwei mittels einer Verbindungsschraube 16 miteinander zu verschraubenden Bauteilen 12, 14 dargestellt. Bei dem einen Bauteil 12, nachfolgend als erstes Bauteil 12 bezeichnet, kann es sich beispielsweise um einen Lagerbügel für einen Türaußengriff eines Kraftfahrzeugs handeln, während das andere Bauteil 14, nachfolgend als zweites Bauteil 14 bezeichnet, durch eine Tragstruktur des Kraftfahrzeugs gebildet sein kann.

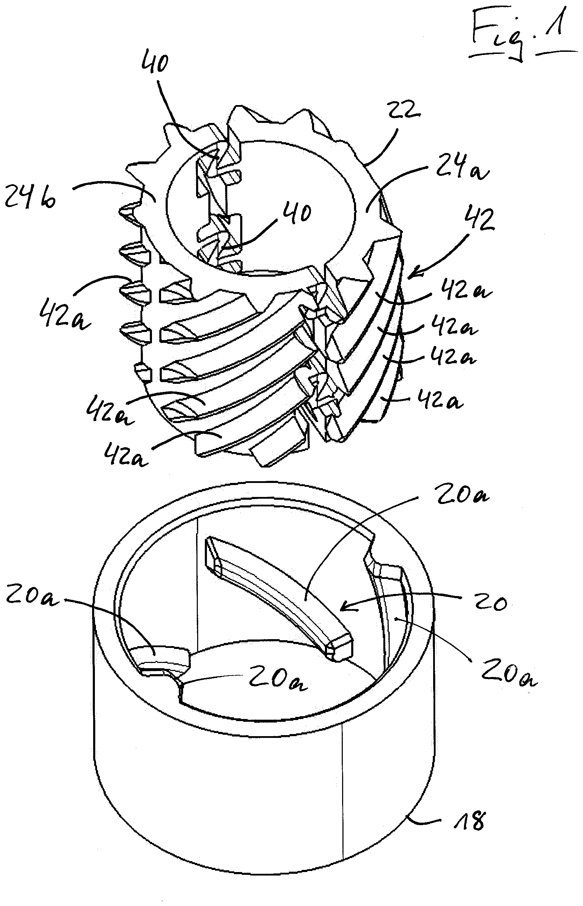

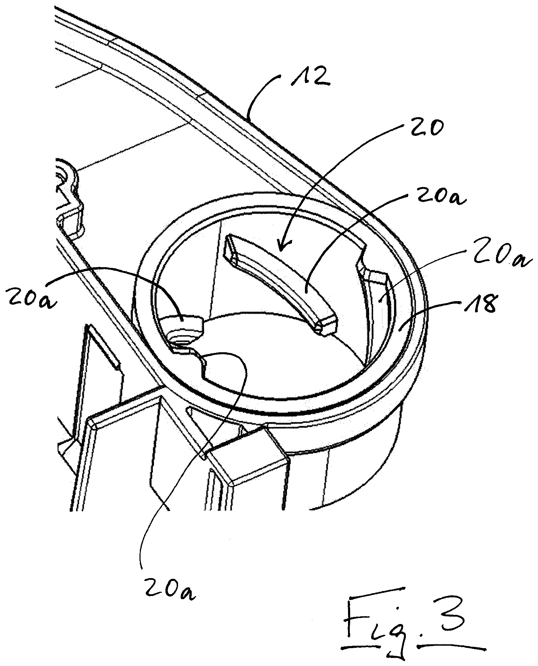

Die Toleranzausgleichsvorrichtung umfasst ein hohlzylindrisches Grundelement 18, welches mit dem ersten Bauteil 12 fest verbunden sein kann, beispielsweise in dieses eingeclipst, eingepresst, eingeklebt oder eingeschweißt sein kann. Bei dem in Fig. 1 dargestellten Grundelement 18 handelt es sich um ein mittels eines Spritzgussverfahrens hergestelltes Kunststoffteil. Alternativ kann das Grundelement 18 aber auch einstückig mit dem ersten Bauteil 12 ausgebildet sein, wie es in Fig. 3 dargestellt ist. Auch in diesem Fall kann das Grundelement 18 als Teil des Bauteils 12 aus Kunststoff gebildet sein, z.B. mittels eines Spritzgussverfahrens.

Das Grundelement 18 weist ein Innengewinde 20 auf, welches jedoch nicht durchgängig sondern durch mehrere, im vorliegenden Ausführungsbeispiel vier, in Umfangsrichtung gleich verteilt angeordnete Gewindegangabschnitte 20a gebildet ist. Alle Gewindegangabschnitte 20a weisen die gleiche Steigung auf, welche derart groß gewählt ist, dass das Gewinde des Grundelements 18 ein Steilgewinde bildet.

Die Toleranzausgleichsvorrichtung umfasst ferner ein in das Grundelement 18 einschraubbares Ausgleichselement 22, welches wie das Grundelement 18 aus einem Kunststoffmaterial gebildet sein kann, z.B. mittels eines Spritzgussverfahrens.

Das Ausgleichselement 22 ist topfförmig ausgebildet. Konkret weist das Ausgleichselement 22 einen hohlzylindrischen Abschnitt 24 auf, der an seinem dem zweiten Bauteil 14 zugewandeten Ende in einen Bodenabschnitt 26 übergeht.

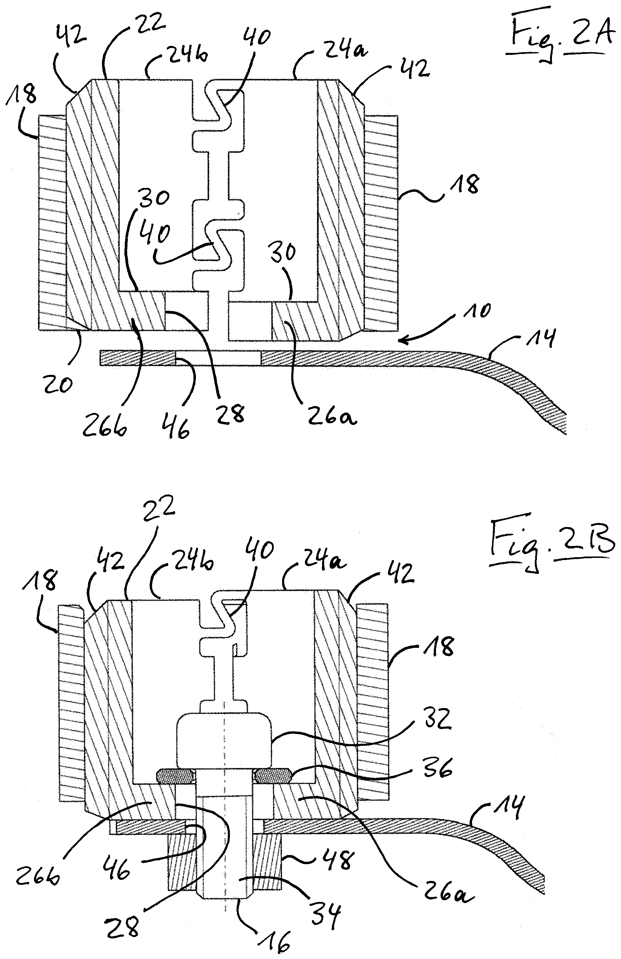

Der Bodenabschnitt 26 definiert einen zentralen axialen Durchgang 28 für die Verbindungsschraube 16 sowie eine an den Durchgang 28 angrenzende Angriffsfläche 30 für einen Kopf 32 der Verbindungsschraube 16. Grundsätzlich ist es denkbar, einen Durchmesser des Durchgangs 28 minimal größer zu wählen als einen Außendurchmesser eines Schafts 34 der Verbindungsschraube 16, so dass der Kopf 32 der Verbindungsschraube 16 direkt mit der Angriffsfläche 30 in Kontakt treten kann. Um radiale Toleranzen besser ausgleichen zu können, ist der Durchmesser des Durchgangs 28 im vorliegenden Ausführungsbeispiel jedoch sogar größer als ein Außendurchmesser des Kopfes 32 der Verbindungsschraube 16 gewählt, so dass eine geeignete Unterlegscheibe 36 zwischen dem Kopf 32 der Verbindungsschraube 16 und dem Bodenabschnitt 26 des Ausgleichselements 22 angeordnet werden muss, um zu verhindern, dass der Kopf 32 in den Durchgang 28 eintritt. In diesem Fall liegt der Kopf 32 der Verbindungsschraube 16 im Endmontagezustand (Fig. 2B) also lediglich indirekt, nämlich über die Unterlegscheibe 36, an der Angriffsfläche 30 des Ausgleichselements 22 an.

Das Ausgleichselement 22 setzt sich aus zwei Segmenten, hier in Form von Hohlzylinderhälften 24a, 24b, zusammen, welche durch Verbindungselemente, konkret durch zwei Paare von jeweils axial zueinander beabstandeten Federelementen 40, miteinander verbunden sind. Jedes Federelement 40 ist durch einen Steg gebildet, welcher derart zweifach abgewinkelt ist, dass er dem Federelement 40 eine Z-Form verleiht. In einem Ausgangs- oder Ruhezustand des Ausgleichselements 22 sind die Hohlzylinderhälften 24a, 24b derart axial versetzt zueinander angeordnet, dass eine an der einen Hohlzylinderhälfte 24a ausgebildete Bodenhälfte 26a und eine an der anderen Hohlzylinderhälfte 24b ausgebildete Bodenhälfte 26b nicht in einer Ebene liegen, sondern einen gewissen axialen Versatz relativ zueinander aufweisen (Fig. 2A).

An der Außenseite des Ausgleichselements 22 sind in Umfangsrichtung verteilt vier Gruppen von jeweils parallel zueinander verlaufenden Gewindegangabschnitten 42a ausgebildet, wobei an jeder Hohlzylinderhälfte 24a, 24b zwei Gruppen von Gewindegangabschnitten 42a vorgesehen sind. In dem in Fig. 2A gezeigten Ausgangs- bzw. Ruhezustand des Ausgleichselements 22 sind die Gewindegangabschnitte 42a derart ausgerichtet, dass sie ein mehrgängiges Außengewinde 42 des Ausgleichselements 22 bilden. Dabei ist die Steigung des Außengewindes 42 des Ausgleichselements 22 an die Steigung des Innengewindes 20 des Grundelements 18 angepasst, das heißt auch das Außengewinde 42 des Ausgleichselements 22 bildet ein Steilgewinde, so dass der Gewindeeingriff von Grundelement 18 und Ausgleichselement 22 nicht-selbsthemmend ist.

Soll das erste Bauteil 12 mit dem zweiten Bauteil 14 verschraubt werden, so wird das erste Bauteil 12 mitsamt der Toleranzausgleichsvorrichtung, das heißt mit dem Grundelement 18 und dem darin eingeschraubten Ausgleichselement 22 an dem zweiten Bauteil 14 angeordnet. Als Nächstes wird die Verbindungsschraube 16 mitsamt Unterlegscheibe 36 in einer Einführrichtung in die Toleranzausgleichsvorrichtung eingeführt, in Fig. 2A und 2B von oben, und durch den Durchgang 28 des Ausgleichselements 22 sowie durch eine Bohrung 46 des zweiten Bauteils 14 hindurch in ein Mutternelement 48 eingeschraubt.

Sobald der Kopf 32 der Verbindungsschraube 16 über die Unterlegscheibe 36 mit dem Bodenabschnitt 26 des Ausgleichselements 22 in Kontakt gerät und eine in der Einführrichtung wirkende Axialkraft auf das Ausgleichselement 22 ausübt, tritt dieses aus dem Grundelement 18 heraus, in Fig. 2A und 2B nach unten, bis es an dem zweiten Bauteil 14 anliegt (Fig. 2B). Es versteht sich, dass die dem zweiten Bauteil 14 anfänglich näherliegende Hohlzylinderhälfte 24a, in Fig. 2A und 2B die rechte Hohlzylinderhälfte, zuerst an dem zweiten Bauteil 14 zur Anlage kommt und bei einem weiteren Anziehen der Verbindungsschraube 16 auch die von dem zweiten Bauteil 14 anfänglich wegversetzte andere Hohlzylinderhälfte 24b gegen das zweite Bauteil 14 bewegt wird, bis schließlich beide Bodenhälften 26a, 26b zwischen der Unterlegscheibe 36 und dem zweiten Bauteil 14 geklemmt werden.

Die Axialverschiebung der Hohlzylinderhälften 24a, 24b relativ zueinander bewirkt eine Verspannung des Außengewindes 42 des Ausgleichselements 22 in dem Innengewinde 20 des Grundelements 18. Hierdurch werden Toleranzen zwischen den Gewinden 20, 42 ausgeglichen und Spiel in dem Gewindeeingriff zwischen Grundelement 18 und Ausgleichselement 22 beseitigt.

Im Ergebnis sorgt die Toleranzausgleichsvorrichtung auf diese Weise also trotz eventueller baulicher Toleranzen für eine spielfreie und zuverlässige Verschraubung des ersten Bauteils 12 an dem zweiten Bauteil 14.

### Bezugszeichenliste

- 10: Spalt
- 12: erstes Bauteil
- 14: zweites Bauteil
- 16: Verbindungsschraube
- 18: Grundelement
- 20: Innengewinde
- 20a: Gewindegangabschnitt
- 22: Ausgleichselement
- 24: hohlzylindrischer Abschnitt
- 24a: Hohlzylinderhälfte
- 24b: Hohlzylinderhälfte
- 26: Bodenabschnitt
- 26a: Bodenhälfte
- 26b: Bodenhälfte
- 28: Durchgang
- 30: Angriffsfläche
- 32: Schraubenkopf
- 34: Schaft
- 36: Unterlegscheibe
- 40: Federelement
- 42: Außengewinde
- 42a: Gewindegangabschnitt
- 46: Bohrung
- 48: Mutternelement

## Patentansprüche

1. Vorrichtung zum Ausgleichen von Toleranzen zwischen einem ersten Bauteil (12) und einem mittels einer Verbindungsschraube (16) mit diesem zu verschraubenden zweiten Bauteil (14), umfassend ein Grundelement (18) und ein mit dem Grundelement (18) in Gewindeeingriff stehendes Ausgleichselement (22), wobei der Gewindeeingriff derart nicht-selbsthemmend ist, dass sich das Ausgleichselement (22) in einer Einführrichtung der Verbindungsschraube (16) aus dem Grundelement (18) herausbewegt, wenn die Verbindungsschraube (16) eine in der Einführrichtung wirkende Axialkraft auf das Ausgleichselement (22) ausübt,
**dadurch gekennzeichnet, dass**
das Ausgleichselement (22) aus wenigstens zwei Segmenten (24a, 24b) zusammengesetzt ist, die axial zueinander verschiebbar sind.

2. Vorrichtung nach Anspruch 1,
wobei das Grundelement (18) und das Ausgleichselement (22) jeweils ein Steilgewinde ausbilden.

3. Vorrichtung nach Anspruch 1 oder 2,
wobei das Grundelement (18) ein Innengewinde (20) und das Ausgleichselement (22) ein Außengewinde (42) ausbildet.

4. Vorrichtung nach einem der vorstehenden Ansprüche,
wobei das Grundelement (18) zwei einander gegenüberliegende Gewindegangabschnitte (20a), insbesondere gleicher Steigung, ausbildet.

5. Vorrichtung nach einem der vorstehenden Ansprüche,
wobei das Ausgleichselement (22) ein mehrgängiges Gewinde (42) ausbildet, insbesondere welches mehrere in Umfangsrichtung verteilt angeordnete Gruppen von jeweils parallel zueinander angeordneten Gewindegangabschnitten (42a) umfasst.

6. Vorrichtung nach einem der vorstehenden Ansprüche,
wobei das Ausgleichselement (22) eine Angriffsfläche (30) für einen Kopf (32) der Verbindungsschraube (16) ausbildet.

7. Vorrichtung nach einem der vorstehenden Ansprüche,
wobei das Ausgleichselement (22) topfförmig ausgebildet ist.

8. Vorrichtung nach einem der vorstehenden Ansprüche,
wobei das Ausgleichselement (22) einen hohlzylindrischen Abschnitt (24) umfasst, der an seinem einen Ende, insbesondere an seinem dem zweiten Bauteil (14) zugewandten Ende, in einen Bodenabschnitt (26) übergeht, welcher einen Durchgang (28) für die Verbindungsschraube (16) ausbildet und eine Angriffsfläche (30) für einen Kopf (32) der Verbindungsschraube (14) definiert.

9. Vorrichtung nach einem der vorstehenden Ansprüche,
wobei die Segmente (24a, 24b) zumindest annähernd teilhohlzylindrisch ausgebildet sind.

10. Vorrichtung nach Anspruch 9,
wobei die Segmente (24a, 24b) mittels Verbindungselementen stoffschlüssig oder form- und/oder kraftschlüssig miteinander verbunden sind.

11. Vorrichtung nach Anspruch 9 oder 10,
wobei die Verbindungselemente Federelemente (40) umfassen, insbesondere einstückig mit den Segmenten (24a, 24b) ausgebildete Federelemente (40).

12. Vorrichtung nach Anspruch 9 oder 10,
wobei die Segmente (24a, 24b) miteinander verclipst sind.

13. Vorrichtung nach einem der Ansprüche 10 bis 12,
wobei die Segmente (24a, 24b) in einem Ausgangs- oder Ruhezustand des Ausgleichselements (22) durch die Verbindungselemente axial zueinander versetzt gehalten sind.

14. Vorrichtung nach Anspruch 13,
wobei Gewindegangabschnitte (42a) des einen Segments (24a) und Gewindegangabschnitte (42a) des anderen Segments (24b) derart angeordnet sind, dass sie gemeinsam das Gewinde (42) des Ausgleichselements (22) bilden, wenn sich das Ausgleichselement (22) in seinem Ausgangs- bzw. Ruhezustand befindet.

15. Vorrichtung nach einem der vorstehenden Ansprüche,
wobei das Ausgleichselement (22) aus einem Kunststoffmaterial gebildet und insbesondere ein Spritzgussteil ist und/oder das Grundelement (18) aus einem Kunststoffmaterial gebildet und insbesondere ein Spritzgussteil ist; und/oder
wobei das Grundelement (18) durch das erste Bauteil (12) gebildet ist oder mit dem ersten Bauteil (12) fest verbunden ist.

## Claims

1. A device for compensating tolerances between a first component (12) and a second component (14) to be screwed to it by means of a connecting screw (16), the device comprising a base element (18) and a compensation element (22) that is in threaded engagement with the base element (18), wherein the threaded engagement is non-self-locking such that the compensation element (22) moves out of the base element (18) in an insertion direction of the connecting screw (16) when the connecting screw (16) exerts an axial force acting in the insertion direction on the compensation element (22),
**characterized in that**
the compensation element (22) is composed of at least two segments (24a, 24b) which are axially displaceable relative to one another.

2. A device in accordance with claim 1,
wherein the base element (18) and the compensation element (22) each form a steep thread.

3. A device in accordance with claim 1 or claim 2,
wherein the base element (18) forms an internal thread (20) and the compensation element (22) forms an external thread (42).

4. A device in accordance with any one of the preceding claims,
wherein the base element (18) forms two opposite thread sections (20a), in particular with the same pitch.

5. A device in accordance with any one of the preceding claims,
wherein the compensation element (22) forms a multi-start thread (42), in particular which comprises a plurality of groups of thread sections (42a) distributed in the circumferential direction, with each of the thread sections (42a) being arranged in parallel with one another.

6. A device in accordance with any one of the preceding claims,
wherein the compensation element (22) forms a contact surface (30) for a head (32) of the connecting screw (16).

7. A device in accordance with any one of the preceding claims,
wherein the compensation element (22) is cup-shaped.

8. A device in accordance with any one of the preceding claims,
wherein the compensation element (22) comprises a hollow cylindrical section (24) which at its one end, in particular at its end facing the second component (14), merges into a bottom section (26) which forms a passage (28) for the connecting screw (16) and defines a contact surface (30) for a head (32) of the connecting screw (14).

9. A device in accordance with any one of the preceding claims,
wherein the segments (24a, 24b) are at least approximately partially hollow cylindrical.

10. A device in accordance with claim 9,
wherein the segments (24a, 24b) are connected to one another by means of connecting elements with a material fit or with a form and/or force fit.

11. A device in accordance with claim 9 or 10,
wherein the connecting elements comprise spring elements (40), in particular spring elements (40) formed in one piece with the segments (24a, 24b).

12. A device in accordance with claim 9 or 10,
wherein the segments (24a, 24b) are clipped together.

13. A device in accordance with any one of the claims 10 to 12,
wherein the segments (24a, 24b) are held axially offset from one another by the connecting elements in an initial or idle state of the compensation element (22).

14. A device in accordance with claim 13,
wherein thread sections (42a) of the one segment (24a) and thread sections (42a) of the other segment (24b) are arranged such that they together form the thread (42) of the compensation element (22) when the compensation element (22) is in its initial or idle state.

15. A device in accordance with any one of the preceding claims,
wherein the compensation element (22) is formed from a plastic material and in particular is an injection molded part and/or the base element (18) is formed from a plastic material and in particular is an injection molded part; and/or
wherein the base element (18) is formed by the first component (12) or is firmly connected to the first component (12).

## Revendications

1. Dispositif pour compenser des tolérances entre un premier composant (12) et un deuxième composant (14) à visser sur celui-ci au moyen d'une vis de liaison (16), comprenant un élément de base (18) et un élément de compensation (22) en engagement par filetage avec l'élément de base (18), l'engagement par filetage étant non-autobloquant de telle sorte que l'élément de compensation (22) sort de l'élément de base (18) dans une direction d'introduction de la vis de liaison (16) lorsque la vis de liaison (16) exerce une force axiale sur l'élément de compensation (22) agissant dans la direction d'introduction,
**caractérisé en ce que**
l'élément de compensation (22) est composé d'au moins deux segments (24a, 24b) qui peuvent être déplacés axialement l'un par rapport à l'autre.

2. Dispositif selon la revendication 1,
dans lequel l'élément de base (18) et l'élément de compensation (22) forment chacun un filetage à pas rapide.

3. Dispositif selon la revendication 1 ou 2,
dans lequel l'élément de base (18) forme un filetage intérieur (20) et l'élément de compensation (22) forme un filetage extérieur (42).

4. Dispositif selon l'une des revendications précédentes,
dans lequel l'élément de base (18) forme deux portions de filetage (20a) opposées l'une à l'autre, en particulier de même pas.

5. Dispositif selon l'une des revendications précédentes,
dans lequel l'élément de compensation (22) forme un filetage multiple (42), en particulier qui comprend plusieurs groupes de portions de filetage (42a) respectives, disposées parallèlement les unes aux autres, qui sont disposés en étant répartis dans la direction circonférentielle.

6. Dispositif selon l'une des revendications précédentes,
dans lequel l'élément de compensation (22) forme une surface d'attaque (30) pour une tête (32) de la vis de liaison (16).

7. Dispositif selon l'une des revendications précédentes,
dans lequel l'élément de compensation (22) est en forme de pot.

8. Dispositif selon l'une des revendications précédentes,
dans lequel l'élément de compensation (22) comprend une portion cylindrique creuse (24) qui, à l'une de ses extrémités, en particulier à son extrémité tournée vers le deuxième composant (14), se transforme en une portion de fond (26) qui forme un passage (28) pour la vis de liaison (16) et qui définit une surface d'attaque (30) pour une tête (32) de la vis de liaison (14).

9. Dispositif selon l'une des revendications précédentes,
dans lequel les segments (24a, 24b) sont réalisés au moins approximativement en forme de cylindre creux partiel.

10. Dispositif selon la revendication 9,
dans lequel les segments (24a, 24b) sont reliés entre eux par coopération de matière ou par coopération de forme et/ou de force au moyen d'éléments de liaison.

11. Dispositif selon la revendication 9 ou 10,
dans lequel les éléments de liaison comprennent des éléments élastiques (40), en particulier des éléments élastiques (40) réalisés d'une seule pièce avec les segments (24a, 24b).

12. Dispositif selon la revendication 9 ou 10,
dans lequel les segments (24a, 24b) sont clipsés entre eux.

13. Dispositif selon l'une des revendications 10 à 12,
dans lequel, dans un état de départ ou de repos de l'élément de compensation (22), les segments (24a, 24b) sont maintenus décalés axialement l'un par rapport à l'autre par les éléments de liaison.

14. Dispositif selon la revendication 13,
dans lequel des portions de filetage (42a) d'un segment (24a) et des portions de filetage (42a) de l'autre segment (24b) sont agencées de manière à former ensemble le filetage (42) de l'élément de compensation (22), lorsque l'élément de compensation (22) est dans son état de départ ou de repos.

15. Dispositif selon l'une des revendications précédentes,
dans lequel l'élément de compensation (22) est réalisé en un matériau plastique et est en particulier une pièce moulée par injection, et/ou l'élément de base (18) est réalisé en un matériau plastique et est en particulier une pièce moulée par injection ; et/ou
l'élément de base (18) est formé par le premier composant (12) ou est solidaire du premier composant (12).
